(19) Europäisches Patentamt / European Patent Office / Office européen des brevets

(11) **EP 0 933 885 B1**

(12) **FASCICULE DE BREVET EUROPEEN**

(45) Date de publication et mention
de la délivrance du brevet:
**14.04.2010   Bulletin 2010/15**

(51) Int Cl.:
**H04B 7/10** [(2006.01)]

(21) Numéro de dépôt: **99400153.5**

(22) Date de dépôt: **22.01.1999**

(54) **Procédé de détection cyclique en diversité de polarisation de signaux radioélectriques numériques cyclostationnaires**

Verfahren zur zyklischen Detektion von digitalen cyclostationären Funksignalen mit Polarisationsdiversität

Method for cyclic detection in polarisation diversity of digital cyclostationary signals

(84) Etats contractants désignés:
**DE FI FR GB IT NL SE**

(30) Priorité: **23.01.1998   FR 9800731**

(43) Date de publication de la demande:
**04.08.1999   Bulletin 1999/31**

(73) Titulaire: **Thales**
**92200 Neuilly Sur Seine (FR)**

(72) Inventeur: **Ferreol, Anne,**
**Thomson-CSF P.I.D.B.**
**94117 Arcueil Cedex (FR)**

(74) Mandataire: **Lucas, Laurent Jacques et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**US-A- 5 319 677     US-A- 5 592 177**

- **ROBERTS R S ET AL: "Computationally efficient algorithms for cyclic spectral analysis" IEEE SIGNAL PROCESSING MAGAZINE, APRIL 1991, USA, vol. 8, no. 2, pages 38-49, XP002082873 ISSN 1053-5888**

## Description

La présente invention se rapporte à un procédé de détection cyclique en diversité de polarisation de signaux radioélectriques numériques cyclostationnaires concernant le domaine des radiocommunications.

L'invention concerne en particulier la détection par deux antennes de diagramme de rayonnement sensible à des polarisations orthogonales de signaux radioélectriques.

Dans le domaine des radiocommunications, le nombre de signaux numériques est important et croît rapidement. Lors d'une communication radio un émetteur émet des signaux radioélectriques dans un ou plusieurs canaux fréquentiels chacun caractérisé par une bande fréquentielle $B_{max}$ et une fréquence centrale. Les signaux transmis dans ces canaux fréquentiels sont caractérisés par un certain nombre de paramètres comme leur débit binaire, leur indice de modulation ou leur fréquence porteuse. L'annexe A est un glossaire de termes utilisés dans le texte. Il est connu des techniques pour calculer la corrélation spectrale ou la corrélation cyclique de signaux cyclostationnaires pour déterminer ces paramètres et détecter ces signaux. L'annexe B regroupe un certain nombre de définitions et de propriétés concernant les signaux cyclostationnaires, les statistiques cycliques d'ordre 2 et la corrélation spectrale de tels signaux. Les systèmes connus mettant en oeuvre ces techniques réalisent cette détection à partir d'un signal reçu sur une seule antenne. En particulier, il est connu l'algorithme FAM, de l'expression anglo-saxonne FFT Accumulation Method, qui a fait l'objet de publications, notamment lors du colloque intitulé « 4th ASSP Workshop on spectrum modeling, Aug. 1988 » et en particulier sous le titre « Digital Implementation of spectral correlation analysers » de W.A. BROWN, H.H. LOOMIS et sous le titre « Computionaly efficient algorithms for cyclic spectral analysers » de R.S. ROBERTS, W.A. BROWN, H.H. LOOMIS, (XP002082873). L'algorithme FAM permet de calculer rapidement des estimateurs de corrélation spectrale par l'intermédiaire de FFT dans tout l'espace fréquence cyclique - fréquence harmonique $(\alpha, f)$.

L'estimateur du premier moment $E[x(f_k)x(f_m)^*]$ a pour expression :

$$\hat{\gamma}_{x1}(\alpha_0, f_0) = \sum_{t=1}^{K} x(f_k, t)\, x(f_m, t)^* \exp\{-j2\pi\, \delta\alpha\, t\} \qquad (1)$$

avec $f_0 = \dfrac{f_k + f_m}{2}$ et $\alpha_0 = f_k - f_m + \delta\alpha$

L'estimateur du second moment $E[x(f_k)x(-f_m)]$ a pour expression :

$$\hat{\gamma}_{x2}(\alpha_0, f_0) = \sum_{t=1}^{K} x(f_k, t)\, x(-f_m, t) \exp\{-j2\pi\, \delta\alpha\, t\} \qquad (2)$$

avec $f_0 = \dfrac{f_k - f_m}{2}$ et $\alpha_0 = f_k + f_m + \delta\alpha$

Les signaux $x(f,t)$ sont calculés par une batterie de filtres de bande $B_{canal}$ et de fréquence centrale notée $f_k$, $f_m$. Le signal $x(f,t)$ a donc une bande valant $B_{canal}$. Pour se rapprocher de la représentation fréquentielle exacte du signal $x(t)$, il faut que $B_{canal}$ soit très inférieur à la bande B du signal $x(t)$. Comme $x(f)$ est calculé dans une bande non nulle ce signal $x(f)$ a une évolution au cours du temps et dépend alors de f et t : $x(f,t)$. Dans une première étape, les signaux $x(f_k,t)$ et $x(f_m,t)^*$ sont intercorrélés après avoir été mis en bande de base. Ces signaux étant dans une bande $B_{canal}$ non nulle, le signal obtenu $z(t)$ évolue au cours du temps dans une bande de largeur $2 \times B_{canal}$. Etant donné que $z(t)$ est dans une bande non nulle et que le pic de corrélation en fréquence cyclique n'est pas forcément positionné en $f_k$-$f_m$, il est nécessaire de réaliser une transformée de Fourier de $z(t)$ pour obtenir le décalage $\delta\alpha$ de ce pic de corrélation.

Pour permettre un calcul rapide des estimateurs de corrélation spectrale, $\hat{\gamma}_{x1}$ et $\hat{\gamma}_{x2}$, l'algorithme FAM se déroule en plusieurs étapes.

Dans une première étape, les signaux $x(f_k,t)$ et $x(-f_m,t)$ sont calculés par un système de FFT glissantes. L'écart $\Delta\alpha = f_{k+1} - f_k$ entre les fréquences $f_{k+1}$ et $f_k$ est constant et la fréquence d'échantillonnage des signaux $x(f,t)$ vaut

$Fe_{canal} = \dfrac{Fe}{RE}$, avec RE le recouvrement des fenêtres glissantes en nombre d'échantillons et Fe la fréquence d'échantillonnage de $x(t)$.

Dans une deuxième étape, est effectué le calcul du signal z(t) = x(f$_k$, t) $\times$ x(f$_m$, t)* pour le premier moment et du signal z(t) = x(f$_k$,t) $\times$ x(-f$_m$, t) pour le second moment.

Dans une troisième étape, est réalisée une FFT du signal z(t) sur un certain nombre d'échantillons.

Sur le premier moment pour calculer la corrélation spectrale en $f = \dfrac{(f_k + f_m)}{2}$ et pour des $\alpha$ compris entre

$$\alpha_{min} = f_k - f_m - \Delta\frac{\alpha}{2} \quad \text{et} \quad \alpha_{max} = f_k - f_m + \Delta\frac{\alpha}{2}$$ sur K échantillons, il faut réaliser une FFT du signal z(t)

= x(f$_k$, t) $\times$ x(f$_m$, t)* sur K échantillons. Les K échantillons fréquentiels du signal z($\alpha_k$) résultant représentent la corrélation

spectrale en $f = \dfrac{(f_k + f_m)}{2}$ avec des $\alpha_k$ compris entre $\alpha_{min} = f_k - f_m - \dfrac{Fe_{canal}}{2}$ et

$\alpha_{max} = f_k - f_m + \dfrac{Fe_{canal}}{2}$. Comme Fe$_{canal}$ est plus grand que $\Delta\alpha$ seules sont retenues les fréquences cycliques $\alpha_k$ contenues dans l'intervalle $\left(f_k - f_m - \Delta\dfrac{\alpha}{2}\right) \cdots \left(f_k - f_m + \Delta\dfrac{\alpha}{2}\right)$. Toutes les sorties x(f$_k$,t) et x(f$_m$,t)

du banc de filtres sont corrélées pour obtenir les points de la corrélation spectrale dans la zone d'intérêt du premier moment c'est-à-dire pour $\alpha \langle B_{max}$.

Sur le second moment, le calcul de la corrélation spectrale est limité en fréquence harmonique par B$_{max}$.

L'algorithme FAM exposé précédemment ne s'applique qu'à des signaux issus d'une seule antenne. Or, dans le domaine des radiocommunications les signaux se propagent avec une certaine polarisation et toute antenne a un gain qui dépend de la polarisation des signaux reçus. Il en résulte qu'une seule antenne filtre « en polarisation » les sources et peut même complètement annuler les signaux reçus ce qui interdit toute possibilité de détecter les sources. Et ceci quel que soit l'algorithme utilisé, en particulier en utilisant un algorithme FAM.

Le but de l'invention est de proposer une solution à ce problème.

A cet effet, l'invention a pour objet un procédé de détection cyclique en diversité de polarisation de signaux radioélectriques numériques cyclostationnaires de fréquence d'échantillonnage Fe transmis dans un canal fréquentiel de bande B$_{max}$ et reçus sur un réseau de N supérieur ou égal à deux antennes dont leur diagramme de rayonnement présente un maximum maximorum de sensibilité caractérisé en ce qu'il consiste, pour tout couple d'antennes, à acquérir sur une durée d'observation T et dans une bande d'acquisition B$_{acq}$ les signaux numériques en sortie des antennes, à calculer, pour chaque fréquence cyclique d'un espace fréquence cyclique - fréquence harmonique déterminé limité par la bande B$_{max}$ du canal fréquentiel et la bande d'acquisition B$_{acq}$ des signaux numériques acquis, une matrice de covariance cyclique sur un premier moment, respectivement sur un second moment, d'une corrélation spectrale des signaux numériques acquis pour détecter des pics de corrélation spectrale en comparant un rapport de vraisemblance déterminé à partir de la matrice de covariance cyclique avec un seuil de détection déterminé d'une manière statistique.

L'invention consiste en un test de détection cyclique de signaux radioélectriques reçus par tout couple d'antennes d'un réseau de N antennes dont leur diagramme de rayonnement présente un maximum maximorum de sensibilité.

Dans un premier mode de mise en oeuvre du procédé, le réseau comprend N=2 antennes dont les maximums maximorum de sensibilité pointent dans des directions orthogonales.

Dans un deuxième mode de mise en oeuvre du procédé, le réseau comprend N=2 antennes dont les maximums maximorum de sensibilité pointent dans une même direction.

L'invention a pour principal avantage de réaliser un test de détection rapide de signaux radioélectriques présentant une polarisation quelconque en calculant un rapport de vraisemblance suivant une relation simple. Dans le cas d'un réseau à deux antennes et en absence de source, le rapport de vraisemblance suit une loi statistique du chi_2 à huit degrés de liberté. La connaissance de la loi de probabilité du rapport de vraisemblance en l'absence de source permet de calculer un seuil de détection avec une certaine probabilité de fausse alarme pour juger de la présence d'une source en un endroit déterminé de l'espace fréquence cyclique - fréquence harmonique.

Le test de détection cyclique du rapport de vraisemblance est d'une part sur deux antennes et d'autre part statistique. En conséquence, la détection ne se fait pas avec un seuil de détection empirique.

Le procédé selon l'invention a aussi pour avantage de permettre la différenciation de signaux radioélectriques présents dans un même canal fréquentiel mais transmis avec des débits différents. Le procédé selon l'invention permet avantageusement de séparer les signaux radioélectriques selon leur fréquence de modulation mais aussi selon leur débit de transmission.

D'autres avantages et caractéristiques de l'invention apparaîtront dans la description qui suit faite en regard des figures annexées qui représentent :

- la figure 1, le procédé selon l'invention sous la forme d'un organigramme,
- la figure 2, une projection sur l'axe $\alpha$ des fréquences cycliques du rapport de vraisemblance dans le cas de trois sources correspondant à des canaux fréquentiels différents et transmises à un même débit de 25 kbits/s,
- les figures 3 et 4, le résultat du test de détection dans l'espace fréquence cyclique - fréquence harmonique effectué sur le rapport de vraisemblance représenté sur la figure 2,
- la figure 5, un tracé dans l'espace fréquence cyclique - fréquence harmonique délimité par la figure 4 du niveau de la corrélation spectrale du signal aux points $(\alpha_k, f_k)$ où a été détectée une source,
- la figure 6, une projection sur l'axe $\alpha$ des fréquences cycliques du rapport de vraisemblance dans le cas de deux sources correspondant à un même canal fréquentiel et transmises à des débits différents,
- la figure 7, le résultat du test de détection dans l'espace fréquence cyclique - fréquence harmonique effectué sur le rapport de vraisemblance représenté sur la figure 6,
- la figure 8, un algorithme sur le premier moment d'un procédé selon l'invention,
- la figure 9, un algorithme sur le second moment d'un procédé selon l'invention,
- la figure 10, la corrélation spectrale du premier moment d'un signal avec une modulation linéaire BPSK filtrée Nyquist,
- la figure 11, la corrélation spectrale du second moment d'un signal avec une modulation linéaire BPSK filtrée Nyquist, et
- les figures 12a et 12b, les zones d'intérêts fréquence cyclique - fréquence harmonique des corrélations spectrales sur les premier et second moments d'un signal de bande finie B.

Sur les différentes figures, les éléments homologues sont représentés avec une même référence.

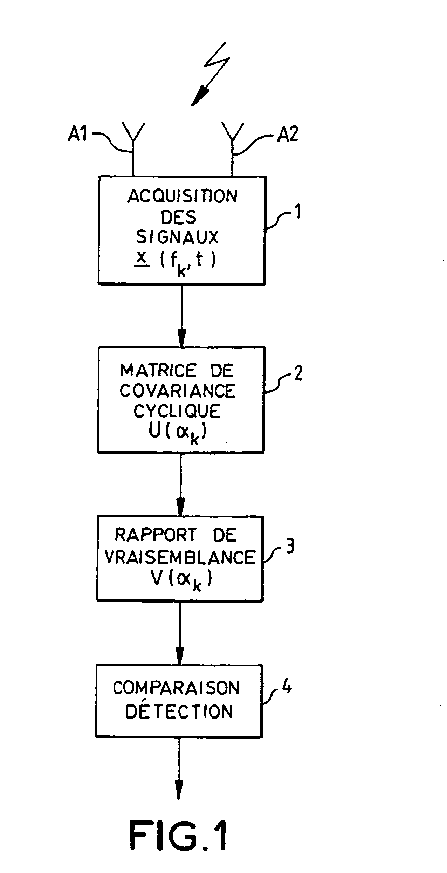

Le procédé selon l'invention se déroule de la façon représentée à la figure 1 suivant quatre étapes principales. Dans une première étape, représentée en 1 à la figure 1, il consiste à recevoir des signaux radioélectriques numériques de fréquence d'échantillonnage Fe, émis par une source dans un canal fréquentiel de transmission de bande $B_{max}$, par un réseau de N antennes A1, ... AN avec N supérieur ou égal à 2, N=2 dans l'exemple représenté sur la figure 1, et à acquérir sur une durée d'observation T et dans une bande d'acquisition $B_{acq}$ les signaux de sortie des antennes pour les ranger dans des vecteurs $\underline{x}(f_k, t)$. L'acquisition 1 des signaux numériques en sortie des antennes A1, AN consiste à filtrer chaque signal numérique reçu sur une antenne par paquets de K échantillons par une batterie de M filtres de bande élémentaire $B_{canal}$, dont les sorties sont sous-échantillonnées d'un facteur RE, et de fréquence centrale donnée notée $f_k$, $f_m$ avec k et m variant entre 1 et M, K est donné par la relation : $K = \dfrac{T \times Fe}{RE}$. La batterie de M filtres est telle que l'ensemble des fréquences centrales réalise un découpage régulier d'une bande d'acquisition $B_{acq}$ de manière à vérifier la relation $B_{acq} \leq M \times B_{canal}$. Le filtrage est réalisé par la mise en oeuvre de FFT suivant des techniques connues de l'homme du métier. Après filtrage chaque signal numérique filtré est rangé dans des vecteurs $\underline{x}(f_k, t)$ dont les composantes $x_1(f_k, t)$, $x_2(f_k, t)$, ..., $x_N(f_k, t)$ correspondent aux signaux des différentes antennes A1, AN filtrés par un même filtre de fréquence centrale déterminée $f_k$. Les vecteurs $\underline{x}(f_k, t)$ permettent lors de l'étape 2 de calculer des matrices de covariance cyclique $U(\alpha_k)$ sur un premier moment, respectivement sur un second moment, d'une corrélation spectrale des signaux numériques reçus. Lors d'une troisième étape, représentée en 3, un rapport de vraisemblance $V(\alpha_k)$ est déterminé à partir des matrices de covariance $U(\alpha_k)$ et est comparé lors de l'étape 4 à un seuil déterminé d'une manière statistique par une loi du chi_2. La comparaison permet de déterminer les doublets fréquence harmonique - fréquence cyclique $(f_0, \alpha_0)$ pour lesquels une source au moins a été détectée.

Lors d'une communication radio, en provenance d'un satellite par exemple, la polarisation des signaux radioélectriques évolue en fonction du milieu de propagation. Le réseau d'antennes utilisé comprend un nombre N supérieur ou égal à deux antennes. Ces antennes ont pour propriété de présenter un diagramme de rayonnement présentant un maximum maximorum de sensibilité dans une direction donnée.

Dans un premier mode de mise en oeuvre du procédé, le réseau comprend un nombre N d'antennes égal à 2 dont les maximums maximorum de sensibilité pointent dans des directions orthogonales. Dans d'autres modes de réalisation de l'invention, le procédé peut être mis en oeuvre pour tout couple d'antennes d'un réseau de N antennes ayant un diagramme de rayonnement présentant un maximum maximorum de sensibilité dans une direction donnée.

En présence d'une source, correspondant par exemple à l'émission d'un satellite, de direction d'arrivée azimut-site $(\theta_0, \Delta_0)$ et de polarisation $P_0$, le signal reçu sur l'antenne « n » est le suivant :

$$x_n(t) = s(t)\, a_n(\theta_0, \Delta_0, P_0) + b_n(t) \qquad (3)$$

où

$a_n(\theta_0, \Delta_0, P_0)$ est la réponse de l'antenne « n » à la direction $(\theta_0, \Delta_0)$ et à la polarisation $P_0$,
$b_n(t)$ le bruit additif et
$s(t)$ le signal temporel de la modulation du signal émis par la source.

Le signal reçu sur l'ensemble des N antennes est un signal vecteur de dimension N dont l'expression est la suivante :

$$\underline{x}(t) = s(t)\, \underline{a}(\theta_0, \Delta_0, P_0) + \underline{b}(t) \qquad (4)$$

où

$\underline{x}(t) = [x_1(t) \cdots x_N(t)]^t$,
$\underline{a}(\theta_0, \Delta_0, P_0) = [a_1(\theta_0, \Delta_0, P_0) \cdots a_N(\theta_0, \Delta_0, P_0)]^t$,
$\underline{b}(t) = [b_1(t) \cdots b_N(t)]^t$.

Le vecteur $\underline{a}(\theta_0, \Delta_0, P_0)$ est appelé vecteur directeur. La polarisation $P_0$ se décompose en une composante horizontale $P_{H0}$ et une composante verticale $P_{V0}$. Le vecteur directeur a la caractéristique de se décomposer linéairement suivant ces deux composantes, soit :

$$\underline{a}(\theta_0, \Delta_0, P_0) = P_{H0}\, \underline{a}_H(\theta_0, \Delta_0) + P_{V0}\, \underline{a}_V(\theta_0, \Delta_0)$$

$\underline{a}_H(\theta_0, \Delta_0)$ : réponse du réseau d'antenne en polarisation horizontale pour une direction $(\theta_0, \Delta_0)$,
$\underline{a}_V(\theta_0, \Delta_0)$ : réponse du réseau d'antenne en polarisation verticale pour une direction $(\theta_0, \Delta_0)$.

Après détection, une goniométrie est généralement mise en oeuvre pour localiser les sources détectées. Etant donnée la décomposition de la polarisation $P_0$, la goniométrie est réalisée à partir de deux tables de calibration : la première pour une polarisation horizontale et la seconde pour une polarisation verticale.
Sur le premier et le second moment de la corrélation spectrale les matrices de covariance cyclique sont définies suivant les relations :
pour le 1er moment :

$$R_x(\alpha, f) = E\left[ \underline{x}\left(f + \frac{\alpha}{2}\right) \underline{x}\left(f - \frac{\alpha}{2}\right)^+ \right] \qquad (5)$$

pour le 2nd moment :

$$C_x(\alpha, f) = E\left[ \underline{x}\left(f + \frac{\alpha}{2}\right) \underline{x}\left(\frac{\alpha}{2} - f\right)^t \right] \qquad (6)$$

Les matrices de covariance cyclique font intervenir toutes les intercorrélations prises 2 à 2 entre les antennes. Ainsi, le terme de la $n_1^{\text{ième}}$ ligne et de la $n_2^{\text{ième}}$ colonne des matrices de covariance cyclique représente l'intercorrélation cyclique entre les antennes $n_1$ et $n_2$.
pour le 1er moment :

$$R_x(\alpha,f)_{(n1,n2)} = E\left[x_{n1}\left(f+\frac{\alpha}{2}\right) x_{n2}\left(f-\frac{\alpha}{2}\right)^*\right] \qquad (7)$$

pour le 2nd moment :

$$C_x(\alpha,f)_{(n1,n2)} = E\left[x_{n1}\left(f+\frac{\alpha}{2}\right) x_{n2}\left(\frac{\alpha}{2}-f\right)\right] \qquad (8)$$

En supposant que le bruit soit stationnaire, les matrices de covariance cyclique s'expriment de la façon suivante en fonction du vecteur directeur $\underline{a}(\theta_0,\Delta_0,P_0)$ et de la corrélation spectrale du signal s(t) :
pour le 1er moment :

$$R_x(\alpha,f) = \gamma_{s1}(\alpha,f) \; \underline{a}(\theta_0,\Delta_0,P_0) \underline{a}(\theta_0,\Delta_0,P_0)^+ \qquad (9)$$

pour le 2nd moment :

$$C_x(\alpha,f) = \gamma_{s2}(\alpha,f) \; \underline{a}(\theta_0,\Delta_0,P_0) \underline{a}(\theta_0,\Delta_0,P_0)^t \qquad (10)$$

Ainsi, lorsque le signal s(t) a une corrélation spectrale sur le premier ou le second moment non nulle, la matrice de covariance cyclique associée est de rang 1. En conséquence, les matrices de covariance cyclique ont les mêmes propriétés cycliques que la corrélation spectrale du signal à goniométrer.

Dans la réalité ces matrices de covariance cyclique sont estimées sur BT échantillons indépendants de la même façon que les corrélations spectrales et valent :
pour le 1er moment :

$$\hat{R}_x\left(f_k - f_m + \delta\alpha, \frac{(f_k+f_m)}{2}\right) = \sum_{t=1}^{K} \underline{x}(f_k,t) \, \underline{x}(f_m,t)^+ \exp\{-j2\pi\,\delta\alpha\,t\} \quad (11)$$

pour le 2nd moment :

$$\hat{C}_x\left(f_k + f_m + \delta\alpha, \frac{(f_k-f_m)}{2}\right) = \sum_{t=1}^{K} \underline{x}(f_k,t) \, \underline{x}(-f_m,t)^t \exp\{-j2\pi\,\delta\alpha\,t\} \quad (12)$$

Ainsi lors du traitement, les triplets $(f_k,f_m,\delta\alpha)$ détectés cycliquement sont stockés puis réutilisés pour intégrer les matrices cycliques et réaliser la goniométrie. En conséquence, il faut stocker les signaux vectoriels $\underline{x}(f_p,t)$ et $\underline{x}(-f_p,t)$ dans un fichier. Il faut remarquer que les échantillons $\underline{x}(f_k,t)$ et $\underline{x}(f_k,t+1)$ ne sont pas forcément indépendants, c'est pourquoi K est supérieur ou égal à BT. La relation entre K et BT dépend de la fréquence d'échantillonnage $Fe_{canal}$,

$$Fe_{canal} = \frac{Fe}{RE},$$ et de la bande $B_{canal}$ des signaux $\underline{x}(f_k, t)$ comme le montre l'expression suivante :

$$BT = \frac{B_{canal} \times K}{Fe_{canal}} \qquad (13)$$

Pour connaître les couples $(\alpha_n,f_n)$ pour lesquels est détectée au minimum une source, un test de détection cyclique selon l'invention sur deux antennes du nombre de sources multicapteurs est mis en oeuvre. Ce test de détection cyclique dépend du produit BT, où B = $B_{canal}$ correspond à la bande des signaux x(f,t) et $T = \dfrac{K}{Fe_{canal}}$ correspond au temps d'intégration des matrices de covariance qui coïncide avec la durée d'observation.

Ce test de détection cyclique a pour objectif de compter le nombre de sources présentes en même temps pour le point fréquence cyclique - - fréquence harmonique $(\alpha_0,f_0)$. En présence de M sources en $(\alpha_0,f_0)$, le modèle du signal devient :

$$\underline{x}(t) = \sum_{m=1}^{M} s_m(t)\,\underline{a}(\theta_m,\Delta_m,P_m) + \sum_{m'=M+1}^{M_T} s_{m'}(t)\,\underline{a}(\theta_{m'},\Delta_{m'},P_{m'}) + \underline{b}(t) \quad (14)$$

D'après ce modèle MT sources sont reçues dont M ont de l'énergie pour leur corrélation spectrale en $(\alpha_0,f_0)$. Suivant ce modèle, en classique (utilisation de la matrice de covariance) $M_T$ sources doivent être goniométrées alors qu'en cyclique (utilisation de la matrice de covariance cyclique) seulement M sources doivent être goniométrées. En effet, les matrices de covariance cyclique ont la caractéristique d'isoler une partie des sources.

Ce test de détection cyclique consiste à estimer le nombre de valeurs singulières non nulles d'une matrice d'intercorrélation entre les signaux $\underline{x}_t$ et $\underline{y}_t$ permettant ainsi d'estimer le rang de cette matrice. Suivant que le premier ou le second moment est utilisé, ces signaux $\underline{x}_t$ et $\underline{y}_t$ valent :

1$^{er}$ moment :

$$\underline{x}_t = \underline{x}\left(f_0 + \frac{\alpha_0}{2},t\right) \text{ et } \underline{y}_t = \underline{x}\left(f_0 - \frac{\alpha_0}{2},t\right) \quad (15)$$

2$^{nd}$ moment :

$$\underline{x}_t = \underline{x}\left(f_0 + \frac{\alpha_0}{2},t\right) \text{ et } \underline{y}_t = \underline{x}\left(\frac{\alpha_0}{2} - f_0,t\right)^* \quad (16)$$

Cette intercorrélation se fait sur K échantillons qui correspondent à BT échantillons statistiquement indépendants :

$$\hat{R}_{xy} = \frac{1}{K}\sum_{t=1}^{K} \underline{x}_t\,\underline{y}_t^+ \quad (17)$$

Le rang de $\hat{R}_{xy}$ est estimé par le rang de sa forme normalisée R. Sachant que les signaux temporels $\underline{x}_t$ et $\underline{y}_t$ sont des processus gaussiens, en présence de $M_0$ sources cycliques le rapport de vraisemblance des $N-M_0$ plus faibles valeurs propres de R suit une loi du chi_2 à $2(N-M_0)^2$ degrés de liberté :

$$V_{cyclique}\left([M=M_0]/M_0\right) = -2BT\,\ln\left(\left[\prod_{m=M+1}^{N}\mu_m\right]\right) \quad (18)$$

avec $R = I - UU^+$ où $U = \hat{R}_x^{-1/2}\,\hat{R}_{xy}\,\hat{R}_y^{-1/2}$   $\mu_m$ : valeurs propres de R

N : nombre d'antennes

Le test de détection cyclique consiste à faire un test de détection presque classique sur la matrice hermitienne normalisée R. Pour cette matrice les valeurs propres de bruit sont exactement égales à 1. C'est pourquoi dans ce rapport de vraisemblance, le logarithme de la valeur moyenne du bruit n'est pas retranché. La seule différence par rapport au classique est le nombre de degrés de liberté : $2(N-M_0)^2$ au lieu de $(N-M_0)^2 -1$.

La connaissance des statistiques de $V_{cyclique}(M_0/M_0)$ permet de fixer un seuil $\beta_M$ pour lequel la probabilité d'avoir strictement plus de M sources est proche de 1 ($p_d\sim1$). Le test est le suivant :

- si $V(M/M_0)\rangle\beta_M$, le nombre de sources $M_0$ présentes est supérieur à M,
- si $V(M/M_0)\langle\beta_M$, le nombre de sources $M_0$ présentes est inférieur ou égal à M.

Pour déterminer le nombre des sources Mo, le test teste d'abord la présence de M=0 source puis de M=1 source jusqu'à ce que $V(M/M_0)$ soit inférieur au seuil $\beta_M$. Le nombre de sources vaut alors $M_0=M$.

Le procédé selon l'invention s'applique pour tout couple d'antennes, soit N=2. Le rapport de vraisemblance défini ci-dessus par la relation (18) est calculé avec les antennes « 1 » et « 2 », dans tout l'espace $(\alpha_0,f_0)$ fréquence cyclique - fréquence harmonique puis un seuil de détection d'au moins une source est fixé. En l'absence de source le rapport de vraisemblance du test de détection cyclique suit une loi du chi_2 à $2 \times 2^2 = 8$ degrés de liberté et devient :

$$V_{xd}{}^2{}_{cyclique}(\alpha_0,f_0) = -2BT\ \ln\left[\det\left[\mathbf{I} - U_{xd}(\alpha_0,f_0)\,U_{xd}(\alpha_0,f_0)^+\right]\right] \quad (20)$$

où sur le $1^{er}$ moment :

$$U_{x1}(\alpha_0,f_0) = \hat{R}_z(\alpha_0,f_0) \qquad (21)$$

où sur le $2^{nd}$ moment :

$$U_{x2}(\alpha_0,f_0) = \bar{C}_z(\alpha_0,f_0) \qquad (22)$$

(d prenant la valeur pour le premier moment, et la valeur 2 pour le second moment)
où

$$\underline{z}(f,t) = \hat{R}_x(f)^{-1/2}\,\underline{x}(f,t) \qquad (23)$$

où $\det[]$ désigne le déterminant
où $\hat{R}_x(f_0)$ la matrice de covariance à la fréquence $f_0$ du signal $\underline{x}(t) = [x_1(t)x_2(t)]^t$
et $\bar{R}_z(\alpha_0,f_0)$ et $\bar{C}_z(\alpha_0,f_0)$ les matrices de covariance cyclique du signal $\underline{z}(t) = [z_1(t)\ z_2(t)]^t$.

La connaissance de la loi de probabilité du rapport de vraisemblance en l'absence de source permet de calculer le seuil de détection avec une certaine probabilité de fausse alarme :

Lorsque N=2, la matrice $\hat{R}_x(f)^{-1/2}$ a par exemple l'expression littérale suivante :

$$\hat{R}_x(f)^{-1/2} = \frac{1}{\sqrt{R_x(f)_{(1,1)}}}\left[-\frac{R_x(f)^*{}_{(1,2)}^{\,1}}{\sqrt{\det[R_x(f)]}}\ \ \frac{R_x(f)_{(1,1)}^{\,0}}{\sqrt{\det[R_x(f)]}}\right] \quad (24)$$

Cette dernière expression permet de calculer facilement le rapport de vraisemblance $V_{xd}{}^2{}_{cyclique}(\alpha,f)$ dans tout l'espace fréquence cyclique - fréquence harmonique. Le calcul de $V_{xd}{}^2{}_{cyclique}(\alpha_0,f_0)$ est simplifié par la connaissance de l'expression littérale du déterminant de la matrice $2\times2$ : $I-U_{xd}(\alpha,f)\,U_{xd}(\alpha,f)^+$. Le test de détection cyclique est le suivant :

$$V_{xd}{}^2{}_{cyclique}(\alpha_0,f_0)\,\rangle\,seuil\left[X^2(8),p_{fa}\right] \qquad (25)$$

alors il y a une source en $(\alpha_0, f_0)$.

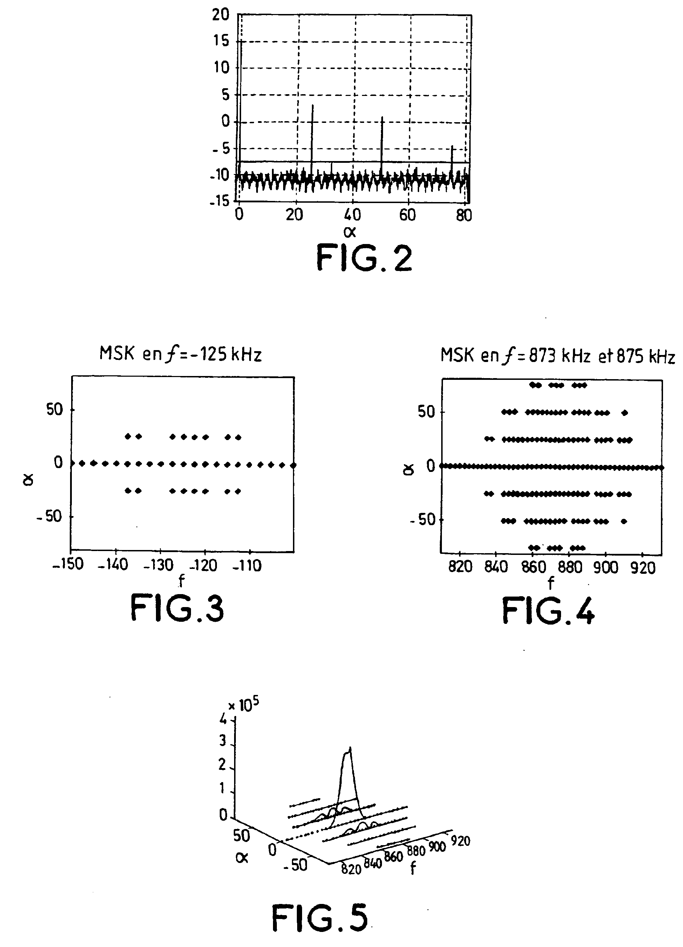

Le seuil de détection est dans ce cas déterminé à partir de la loi du chi_2 avec 8 degrés de liberté pour une certaine probabilité de fausse alarme $p_{fa}$ la plus faible possible. Le test de détection cyclique selon l'invention est illustré par des exemples issus de simulation et représentés par les figures 2 à 7.

Les figures 2, 3, 4 et 5 illustrent le cas de sources de même débit, 25 kbits/s mais dont les fréquences de modulation sont différentes.

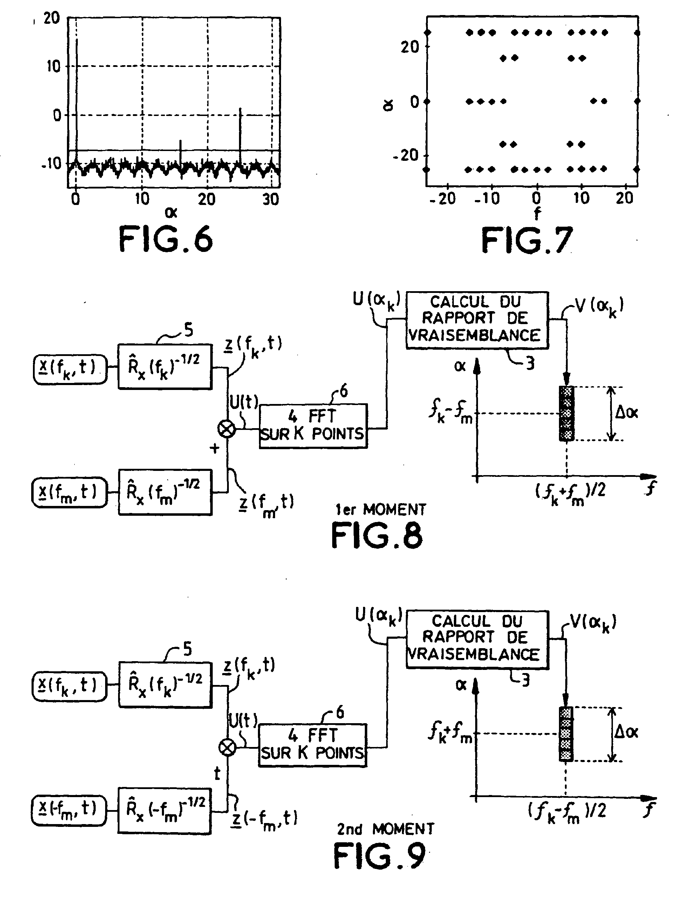

Les figures 6 et 7 illustrent le cas de sources de débits différents mais qui se trouvent dans un même canal fréquentiel.

Sur la figure 2 est représenté le rapport de vraisemblance, sur le premier moment, en présence de trois MSK de même débit égal à 25 kbits/s. Le temps d'intégration est de BT=150 échantillons indépendants.

Pour huit degrés de liberté le seuil de détection est situé en -7. Tous les pics de corrélation dont le niveau est supérieur à ce seuil sont détectés. Le test de détection cyclique donne un résultat illustré sur les figures 3 et 4, dans l'espace fréquence cyclique - fréquence harmonique. Le test de détection cyclique permet de détecter les trois sources MSK.

Un pic de corrélation est obtenu tous les 25 kHz car les 3 MSK ont un débit de 25 kbits/s. Pour confirmer qu'il s'agit bien de MSK, un tracé du niveau de corrélation spectrale du signal aux points $(\alpha_k, f_k)$ où a été détectée une source peut être réalisé. Il est illustré par la figure 5.

La figure 6 représente le rapport de vraisemblance sur l'axe des fréquences cycliques $\alpha$ sur le premier moment. Pour huit degrés de liberté, le seuil de détection est situé en -7. Tous les pics de corrélation dont le niveau est supérieur à ce seuil sont détectés. Ceci permet de détecter un pic de corrélation à $\alpha = 16$ kHz et un pic de corrélation à $\alpha = 25$ kHz. Le test de détection cyclique donne un résultat illustré sur la figure 7 dans l'espace fréquence cyclique - fréquence harmonique. Le test de détection cyclique permet de détecter les deux sources situées dans le même canal fréquentiel et de les différencier par leur débit.

Finalement, le procédé selon l'invention peut être schématisé d'une manière condensée illustrée par la figure 8 pour le premier moment et par la figure 9 pour le second moment. Les vecteurs signaux $\underline{x}(f_k,t)$ et $\underline{x}(f_m,t)$, obtenus lors de l'acquisition par tout couple de N = 2 antennes, sont blanchis 5 avec les matrices $R_x(f_k)^{-1/2}$ et $R_x(f_m)^{-1/2}$ données par la relation (24) pour obtenir les vecteurs signaux $\underline{z}(f_k,t)$ et $\underline{z}(f_m,t)$. Ces vecteurs signaux permettent de calculer les K matrices $U(t) = \underline{z}(f_k,t).\underline{z}(f_m,t)^+$ de dimension 2×2 dont les composantes sont notées $u_{ij}$.

Une FFT 6 est réalisée pour chaque composante $u_{ij}$ sur K points en prenant les K composantes $u_{ij}$ des K matrices $U(t)$. Etant donné que les matrices $U(t)$ sont de dimension 2×2, ceci conduit à réaliser quatre FFT sur K points.

Les K matrices $U(\alpha_k)$ résultantes sont de même dimension 2×2 que les matrices $U(t)$.

Les K matrices $U(\alpha_k)$ permettent le calcul 3 du rapport de vraisemblance $V(\alpha_k)$ suivant la relation :

$$V(\alpha_k) = -2.BT \ln\left[\det\left[I - U(\alpha_k)U(\alpha_k)^+\right]\right]$$

Cette expression simple permet de calculer rapidement le rapport de vraisemblance à la fréquence harmonique $f = \dfrac{(f_k + f_m)}{2}$ et aux fréquences cycliques $\alpha_k$ comprises entre $\alpha_{min} = f_k - f_m - \Delta\dfrac{\alpha}{2}$ et $\alpha_{max} = f_k - f_m + \Delta\dfrac{\alpha}{2}$.

Les doublets de fréquences $(f_k, f_m)$ sont tels qu'ils permettent de calculer le rapport de vraisemblance pour les fréquences cycliques inférieures à $\alpha_{max}$.

Le test de détection cyclique, suivant la relation (25), est réalisé sur chacun des points du rapport de vraisemblance calculés précédemment. Ceci permet de déduire les doublets $\left(\dfrac{(f_k + f_m)}{2}, \alpha_k\right)$ pour lesquels au moins une source a été détectée.

Sur le second moment, figure 9, le principe de l'algorithme est le même que celui pour le premier moment en corrélant les vecteurs $\underline{z}(f_k,t)$ et $\underline{z}(-f_m,t)$. Le calcul 3 du rapport de vraisemblance est dans ce cas limité sur les fréquences harmoniques par $B_{max}$.

**Annexe A**

GLOSSAIRE

**A.1. Conventions standards :**

$x^*$ : conjuguée de x
$\underline{x}^t$ : transposée du vecteur $\underline{x}$
$\underline{x}^+$ : transposée conjuguée du vecteur $\underline{x}$
$X^t$ : transposée de la matrice X
$X^+$ : transposée conjuguée de la matrice X
$X^{-1}$ : inverse de X
$E[.]$ : espérance mathématique
$\hat{x}$, $\hat{X}$ : valeurs estimées
$x^* y$ : convolution des signaux x et y
$\otimes$ : produit de Kronecker
BPSK : bi-phase shift keying : modulation linéaire à deux états de phase
MSK : minimum shift keying : modulation par déplacement de fréquence à indice de modulation 0,5 et à phase continue
FSK : frequency shift keying : modulation par déplacement de fréquence
FFT : Fast Fourier Transform : transformée de Fourier rapide
ln : logarithme népérien

**A. 2. Constantes entières :**

N : nombre d'antennes
$M_T$ : nombre de sources à goniométrer suivant les méthodes classiques
M : nombre de sources à goniométrer suivant l'invention
B : bande fréquentielle
$B_{canal}$ : bande fréquentielle élémentaire d'un filtre d'une batterie de filtres.
$B_{max}$ : bande fréquentielle d'un canal fréquentiel de transmission.

**A.3. Variables scalaires :**

$x_n(.)$ : observation sur l'antenne « n »
$s()$ : signal temporel de la modulation du signal émis par la source
$b_n()$ : bruit additif sur l'antenne « n »
Fe : fréquence d'échantillonnage de x(t)
$a_n(\theta_0, \Delta_0, P_0)$ : réponse de l'antenne « n » à la direction $(\theta_0, \Delta_0)$ et à la polarisation $P_0$
$\theta_0$ : azimut de la direction d'arrivée du signal émis par la source
$\Delta_0$ : site de la direction d'arrivée du signal émis par la source
$S_m()$ : signal temporel de la modulation du signal émis par la source « m »
$f_p$, $f_0$, $f_k$, $f_m$, f : fréquences harmoniques
$\alpha$, $\alpha_0$ : fréquences cycliques
RE : recouvrement des fenêtres glissantes en nombre d'échantillons
$\mu_m$ : valeur propre de R

**A. 4. Variables vectorielles et matricielles :**

$\underline{x}$ : signal vecteur de dimension N correspondant au signal reçu sur les N antennes
I : matrice identité
$R_x$ : matrice de covariance du vecteur $\underline{x}$
$R_y$ : matrice de covariance du vecteur $\underline{y}$
$\underline{a}(\theta_0, \Delta_0, P_0)$ : vecteur directeur de dimension N correspondant à la réponse des N antennes à la direction $(\theta_0, \Delta_0)$ et à la polarisation $P_0$

$P_0$ : polarisation du signal s(t)
$R_{xy}$ : matrice d'intercorrélation entre les vecteurs $\underline{x}_t$ et $\underline{y}_t$
R : matrice hermitienne normalisée de la matrice $\hat{R}_{xy}$

**Annexe B**

**Signaux cyclostationnaires reçus sur un capteur. Statistiques cycliques d'ordre 2 et corrélation spectrale.**

Un signal est non stationnaire lorsque sa distribution statistique dépend du temps. Parmi cette classe, les signaux cyclostationnaires ont des statistiques évoluant périodiquement au cours du temps. Dans le cas de signaux numériques (BPSK, FSK, etc.) ces périodicités dépendent en particulier du débit de la modulation et de la fréquence porteuse. Les statistiques d'ordre 2 d'un signal x(t) sont entièrement caractérisées par le premier moment $r_x(t,\tau)$ et le second moment $c_x(t,\tau)$ tel que :
$1^{er}$ moment :

$$r_x(t,\tau) = E\left\{ x\left(t+\frac{\tau}{2}\right) x\left(t-\frac{\tau}{2}\right)^* \right\}$$

$2^{nd}$ moment :

$$c_x(t,\tau) = E\left\{ x\left(t+\frac{\tau}{2}\right) x\left(t-\frac{\tau}{2}\right) \right\}$$

Un signal est stationnaire à l'ordre 2 lorsque les moments associés sont indépendants de t, soit :

$r_x(t, \tau) = r_{x0}(\tau)$
et $c_x(t, \tau) = c_{x0}(\tau)$

Un signal est cyclostationnaire à l'ordre 2 lorsque ces moments sont périodiques en t, soit :

$r_x(t,\tau) = r_x(t + T_1, \tau)$
et $c_x(t, \tau) = c_x(t + T_2, \tau)$

Il faut remarquer que les périodicités $T_1$ et $T_2$ des premier et second moments ne sont pas forcément égales. Ces deux moments peuvent alors s'exprimer suivant une série de Fourier, soit :

$$r_x(t,\tau) = r_{x0}(\tau)$$

$$c_x(t,\tau) = c_{x0}(\tau)$$

Les coefficients de Fourier $r_x(\alpha, \tau)$ et $c_x(\alpha, \tau)$ constituent les fonctions d'autocorrélation cyclique. Ils admettent des pics de corrélation pour les fréquences cycliques $\alpha$ multiples de respectivement $\alpha_1 = \dfrac{1}{T_1}$ et $\alpha_2 = \dfrac{1}{T_2}$ et sont les transformées de Fourier en « t » des moments $r_x(t,\tau)$ et $c_x(t,\tau)$, soit :

$$r_x(\alpha,\tau) = \lim_{T \to \infty} \left[ \frac{1}{T} \int_{-\frac{T}{2}}^{\frac{T}{2}} r_x(t,\tau) \exp\{-j2\pi\,\alpha t\}\, dt \right]$$

$$c_x(\alpha,\tau) = \lim_{T \to \infty} \left[ \frac{1}{T} \int_{-\frac{T}{2}}^{\frac{T}{2}} c_x(t,\tau) \exp\{-j2\pi\,\alpha t\}\, dt \right]$$

Les fonctions d'autocorrélation cyclique $r_x(\alpha,\tau)$ et $c_x(\alpha,\tau)$ admettent pour transformée de Fourier en $\tau$ les corrélations spectrales $\gamma_1(\alpha,f)$ et $\gamma_2(\alpha,f)$, tel que :

$$\gamma_{x1}(\alpha,f) = \int_\tau r_x(\alpha,\tau) \exp\{-j2\pi\,f\tau\}\, d\tau$$

$$\gamma_{x2}(\alpha,f) = \int_\tau c_x(\alpha,\tau) \exp\{-j2\pi\,f\tau\}\, d\tau$$

Si les fonctions $r_x(\alpha,\tau)$ et $c_x(\alpha,\tau)$ admettent des pics de corrélation pour les fréquences cycliques $\alpha$ multiples de respectivement $\alpha_1$ et $\alpha_2$, il en sera de même pour $\gamma_{x1}(\alpha,f)$ et $\gamma_{x2}(\alpha,f)$. Les fonctions $\gamma_{x1}(\alpha,f)$ et $\gamma_{x2}(\alpha,f)$ sont des corrélations spectrales car elles ont pour expression :

$1^{er}$ moment :

$$\gamma_{x1}(\alpha,f) = E\left[ x\left(f + \frac{\alpha}{2}\right) x\left(f - \frac{\alpha}{2}\right)^* \right]$$

$2^{nd}$ moment :

$$\gamma_{x2}(\alpha,f) = E\left[ x\left(f + \frac{\alpha}{2}\right) x\left(\frac{\alpha}{2} - f\right) \right]$$

Il faut remarquer que sur le premier moment en $\alpha=0$, nous obtenons la densité spectrale du signal, c'est-à-dire son spectre de fréquence.

Les signaux non stationnaires ont des moments $r_x(t,\tau)$ et $c_x(t,\tau)$ dépendant du temps « t », il en résulte que les corrélations spectrales $\gamma_{x1}(\alpha,f)$ et $\gamma_{x2}(\alpha,f)$ sont non nulles en dehors de $\alpha=0$ sur le premier moment. Contrairement aux signaux cyclostationnaires il n'y a pas de pic de corrélation mais des continuums d'énergie sur l'axe fréquence cyclique $\alpha$.

Dans le cas d'un signal de bande finie B, l'espace de calcul du premier moment et du deuxième moment peut être limité à un espace déterminé. Soit l'exemple d'une modulation linéaire et en particulier d'une modulation BPSK filtrée Nyquist. Cette BPSK a un débit normalisé de $\alpha_0=0{,}25$ avec une fréquence porteuse normalisée de $f_0=0{,}1$.

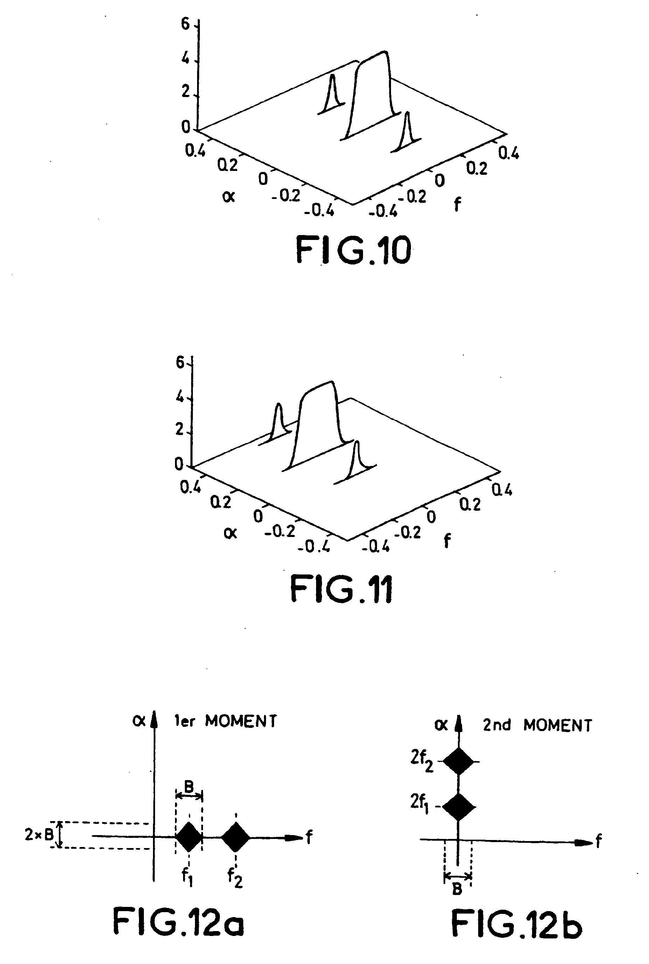

La figure 10 représente la corrélation spectrale du premier moment :

$1^{er}$ moment (BPSK) :

$$\gamma_{X1}(\alpha, f) = E\left[ x\left( f + \frac{\alpha}{2} \right) x\left( f - \frac{\alpha}{2} \right)^{*} \right]$$

La figure 10 illustre le fait qu'il y a présence d'énergie pour les fréquences cycliques $\alpha$ multiples du débit $\alpha_0$. D'autre part, le spectre en fréquence harmonique est centré en $f=f_0$. En conséquence, lors de la détection des couples $(\alpha_k, f_k)$ présentant de l'énergie, il faut scruter les fréquences harmoniques présentes dans la bande d'acquisition du signal. Il faut de plus remarquer que la corrélation spectrale est symétrique autour de l'axe $\alpha=0$.

La figure 11 représente la corrélation spectrale du second moment :
2nd moment :

$$\gamma_{X2}(\alpha, f) = E\left[ x\left( f + \frac{\alpha}{2} \right) x\left( \frac{\alpha}{2} - f \right) \right]$$

Avec le second moment, il y a présence d'énergie pour les fréquences cycliques $\alpha$ égales à $\alpha_o k + 2f_0$ (k : entier). Ainsi les pics de corrélation en fréquence cyclique vont dépendre à la fois du débit et de la fréquence porteuse. Pour la détection d'énergie, il faut donc scruter les fréquences cycliques entre $-B_{acq}$ et $B_{acq}$ ($B_{acq}$ est la bande d'acquisition du signal). D'autre part, le spectre en fréquence harmonique est centré en $f=0$. En conséquence, lors de la détection des couples $(\alpha_k, f_k)$ présentant de l'énergie, il faut scruter les fréquences harmoniques présentes dans la bande B des signaux qui peut être très inférieure à la bande d'acquisition $B_{acq}$. Il faut remarquer que la bande du signal en fréquence harmonique est de l'ordre de grandeur du débit.

Cet exemple illustre clairement que pour un signal de bande finie B et de fréquence porteuse $f_1$ (ou $f_2$), les corrélations spectrales sur les premier et second moments sont non nulles dans des zones fréquence cyclique - fréquence harmonique dépendantes de $f_1$ (ou $f_2$) et B. Les figures 12a et 12b représentent schématiquement ces zones intéressantes.

La bande du signal émis n'est pas toujours connue de la réception, par contre le canal fréquentiel de transmission utilisé est connu par sa bande $B_{max}$, caractéristique du filtre d'émission de l'émetteur, et par sa fréquence centrale. D'après ces remarques, de l'énergie est présente de façon significative sur les premier et second moments de la corrélation spectrale lorsque :
1er moment :

$$0 \langle \alpha \langle B_{max} \quad \text{et} \quad \frac{-B_{acq}}{2} \leq f \leq \frac{B_{acq}}{2}$$

2nd moment :

$$-B_{acq} \langle \alpha \langle B_{acq} \quad \text{et} \quad \frac{-B_{max}}{2} \leq f \leq \frac{B_{max}}{2}$$

En conséquence, il faut réaliser la détection cyclique uniquement dans ces zones fréquence cyclique - fréquence harmonique .

## Revendications

1. Procédé de détection cyclique en diversité de polarisation de signaux radioélectriques numériques cyclostationnaires de fréquence d'échantillonnage Fe transmis dans un canal fréquentiel de bande $B_{max}$ et reçus sur un réseau de N supérieur ou égal à deux antennes (A1,AN) dont leur diagramme de rayonnement présente un maximum maximorum de sensibilité **caractérisé en ce qu'**il consiste, pour tout couple d'antennes (A1,AN), à acquérir (1) sur une durée d'observation T et dans une bande d'acquisition $B_{acq}$ les signaux numériques en sortie des antennes (A1,AN), à calculer (2), pour chaque fréquence cyclique d'un espace fréquence cyclique - fréquence harmonique déterminé limité par la bande $B_{max}$ du canal fréquentiel et la bande d'acquisition $B_{acq}$ des signaux numériques acquis, une matrice de covariance cyclique sur un premier moment, respectivement sur un second moment, d'une corrélation spectrale des signaux numériques acquis pour détecter (4) des pics de corrélation spectrale en comparant (4) un rapport de vraisemblance ($V(\alpha k)$) déterminé (3) à partir de la matrice de covariance cyclique ($U(\alpha k)$) avec un seuil de détection ($\beta M$) déterminé d'une manière statistique.

2. Procédé selon la revendication 1, **caractérisé en ce que** l'acquisition (1) des signaux numériques consiste à filtrer, par une batterie de M filtres de bande élémentaire $B_{canal}$ dont les sorties sont sous-échantillonnées d'un facteur RE et de fréquence centrale donnée ($f_k$) telle que l'ensemble des fréquences centrales ($f_k$) réalise un découpage régulier de la bande d'acquisition $B_{acq}$ de manière à vérifier la relation $B_{acq} \leq M \times B_{canal}$, chaque signal radioélectrique numérique reçu sur une antenne par paquets de K échantillons avec K donné par la relation $K = \dfrac{T \times Fe}{RE}$ et à ranger chaque signal numérique filtré dans des vecteurs ($\underline{x}(f_k,t)$) dont les composantes ($x_1(f_k,t)$, $x_2(f_k,t),...,x_N(f_k,t)$) correspondent aux signaux des différentes antennes (A1,AN) filtrés par un même filtre de fréquence centrale déterminée ($f_k$).

3. Procédé selon la revendication 2, **caractérisé en ce que** le calcul (2) d'une matrice de covariance cyclique ($U(\alpha k)$) sur le premier moment consiste à choisir deux vecteurs ($\underline{x}(f_k,t)$, $\underline{x}(f_m,t)$) de fréquence $f_k$ et $f_m$, à les blanchir (5) pour obtenir deux nouveaux vecteurs ($\underline{z}(f_k,t)$, $\underline{z}(f_m,t)$), à calculer K matrices U(t) données par la relation $U(t) = \underline{z}(f_k,t) \times \underline{z}(f_m,t)^+$ correspondant à la durée d'observation T, à calculer (6) chaque composante $u_{ij(\alpha k)}$ de la matrice de covariance cyclique ($U(\alpha k)$) en réalisant une transformée de Fourier rapide sur K points en prenant les K points de même indice ij des K matrices U(t).

4. Procédé selon l'une quelconque des revendications 2 et 3, **caractérisé en ce que** le calcul d'une matrice de covariance cyclique ($U(\alpha k)$) sur le second moment consiste à choisir deux vecteurs ($\underline{x}(f_k,t)$, $\underline{x}(-f_m,t)$) de fréquence $f_k$ et $-f_m$, à les blanchir (5) pour obtenir deux nouveaux vecteurs ($\underline{z}(f_k,t)$, $\underline{z}(-f_m,t)$), à calculer K matrices U(t) données par la relation $U(t) = \underline{z}(f_k,t), \times \underline{z}(-f_m,t)^t$ correspondant à la durée d'observation T, à calculer (6) chaque composante $u_{ij(\alpha k)}$ de la matrice de covariance cyclique ($U(\alpha k)$) en réalisant une transformée de Fourier rapide sur K points en prenant les K points de même indice ij des K matrices (U(t)).

5. Procédé selon l'une quelconque des revendications 2 à 4, **caractérisé en ce que** pour chaque fréquence cyclique ($\alpha k$) de l'espace fréquence cyclique-fréquence harmonique donné le rapport de vraisemblance ($V(\alpha k)$) est calculé suivant la relation :

$$V(\alpha k) = -2BT \ln\left[\det\left(I - U(\alpha k).U(\alpha k)^+\right)\right]$$

avec I la matrice identité et $B = B_{canal}$.

6. Procédé selon l'une quelconque des revendications 1 à 5, **caractérisé en ce que** le seuil de détection est déterminé par une loi du chi_2.

7. Procédé selon l'une quelconque des revendications 1 à 6, **caractérisé en ce que** les couples d'antennes (A1,AN) sont tels que les maximums maximorum de sensibilité des deux antennes pointent dans deux directions orthogonales.

8. Procédé selon l'une quelconque des revendications 1 à 6, **caractérisé en ce que** les couples d'antennes (A1,AN) sont tels que les maximums maximorum de sensibilité des deux antennes pointent dans la même direction.

**Claims**

1. A process for cyclic detection by polarisation diversity of digital cyclostationary radioelectric signals of sampling frequency Fe, transmitted along a frequency channel of band $B_{max}$ and received in a network N of at least two antennae (A1, AN), the radiation pattern of which has a maximum maximorum of sensitivity, **characterised in that** it consists in, for any pair of antennae (A1, AN), acquiring (1), over an observation period T and in an acquisition band $B_{acq}$, the digital signals output by the antennae (A1, AN), calculating (2), for each cyclic frequency of a determined cyclic frequency-harmonic frequency zone limited by the $B_{max}$ band of the frequency channel and the acquisition band $B_{acq}$ of the acquired digital signals, a cyclic covariance matrix, at a first instant and at a second instant respectively, of a spectral correlation of the acquired digital signals in order to detect (4) spectral correlation peaks by comparing (4) a likelihood ratio ($V(\alpha k)$), determined (3) from the cyclic covariance matrix ($U(\alpha k)$), with a statistically determined detection threshold ($\beta_M$).

2. The process according to claim 1, **characterised in that** the acquisition (1) of the digital signals consists in filtering, using a bank of M elementary band filters $B_{canal}$, the outputs of which are under sampled by a factor RE and are of a given central frequency ($f_k$) so that all of the central frequencies ($f_k$) perform a regular division of the acquisition band $B_{acq}$ in order to verify the relation $B_{acq} \leq MxB_{canal}$, each digital radioelectric signal received on an antenna in packets of K samples, wherein K is provided by the relation $K = \dfrac{TxFe}{RE}$ , and storing each filtered digital signal in vectors ($\underline{x}(f_k,t)$), the components of which ($x_1(f_k,t)$, $x_2(f_k,t)$,..., $x_N(f_k,t)$) correspond to the signals from the different antennae (A1,AN) filtered by the same filter of a determined central frequency ($f_k$).

3. The process according to claim 2, **characterised in that** the calculation (2) of a cyclic covariance matrix ($U(\alpha k)$) at the first instant consists in choosing two vectors ($\underline{x}(f_k,t)$, $\underline{x}(f_m,t)$) of frequency $f_k$ and $f_m$, and whitening (5) them to obtain two new vectors ($\underline{z}(f_k,t)$, $\underline{z}(f_m,t)$), calculating K matrices U(t) provided by the relation U(t) = $\underline{z}(f_k,t)$ x $\underline{z}(f_m,t)^+$ corresponding to the observation period T, calculating (6) each component $u_{ij(\alpha k)}$ of the cyclic covariance matrix ($U(\alpha k)$) by realising a fast Fourier transform on K points by taking the K points of the same index ij of the K matrices U(t).

4. The process according to any one of claims 2 and 3, **characterised in that** the calculation of a cyclic covariance matrix ($U(\alpha k)$) at the second instant consists in choosing two vectors **($\underline{x}(f_k,t)$, $\underline{x}(-f_m,t)$)** of frequency $f_k$ and $f_m$, and whitening (5) them to obtain two new vectors **($\underline{z}(f_k,t)$, $\underline{z}(-f_m,t)$),** calculating K matrices U(t) provided by the relation U(t)=$\underline{z}(f_k,t) \times \underline{z}(-f_m,t)^t$ corresponding to the observation period T, calculating (6) each component $u_{ij(\alpha k)}$ of the cyclic covariance matrix ($U(\alpha k)$) by realising a fast Fourier transform on K points by taking the K points of the same index ij of the K matrices U(t).

5. The process according to any one of claims 2 to 4, **characterised in that** for each cyclic frequency ($\alpha k$) of the given cyclic frequency-harmonic frequency zone, the likelihood ratio ($V(\alpha k)$) is calculated according to the following relation:

$$V(\alpha k) = -2BT \; \text{In} \; [\det(I-U(\alpha k).U(\alpha k)^+)]$$

wherein I is the identity matrix and B=$B_{canal}$.

6. The process according to any one of claims 1 to 5, **characterised in that** the detection threshold is determined by a Chi-square law.

7. The process according to any one of claims 1 to 6, **characterised in that** the antennae pairs (A1, AN) are such that the maximum maximorum of sensibility of the two antennae point in two orthogonal directions.

8. The process according to any one of claims 1 to 6, **characterised in that** the antennae pairs (A1, AN) are such that the maximum maximorum of sensibility of the two antennae point in the same direction.

**Patentansprüche**

1. Verfahren zur zyklischen Detektion von digitalen cyclostationären Funksignalen mit Polarisationsdiversität der Abtastfrequenz Fe, die in einen Band-Frequenzkanal $B_{max}$ übertragen und von einem Netz N größer oder gleich zwei Antennen (A1, AN) empfangen werden, deren Strahlungsdiagramm ein Sensibilitäts-Maximum-Maximorum aufweist, **dadurch gekennzeichnet, dass** es darin besteht, für jedes Antennenpaar (A1, AN) über eine Beobachtungszeit T und in einem Erfassungsband $B_{acq}$ die digitalen Signale, die von den zwei Antennen (A1, AN) abgehen, zu erfassen (1), für jede zyklische Frequenz eines bestimmten, von dem Band $B_{max}$ des Frequenzkanals und dem Erfassungsband $B_{acq}$ der erfassten digitalen Signale begrenzten Bereich zyklische Frequenz - harmonische Frequenz eine zyklische Kovarianzmatrix für einen ersten Moment zu berechnen (2) beziehungsweise für einen zweiten Moment einer spektralen Korrelation der erfassten digitalen Signale, um spektrale Korrelationsspitzen (4) durch Vergleich (4) eines bestimmten Wahrscheinlichkeitsverhältnisses (V($\alpha$K)) (3), ausgehend von der zyklischen Kovarianzmatrix (U($\alpha$k)), mit einer bestimmten Detektionsschwelle ($\beta_M$), die statistisch festgestellt wurde, zu ermitteln (4).

**2.** Verfahren nach Anspruch 1, **dadurch gekennzeichnet, dass** die Erfassung (1) der digitalen Signale darin besteht, durch ein Set von M Filtern des elementaren Bandes $B_{canal}$, dessen Ausgänge mit einem Faktor RE und gegebener zentraler Frequenz ($f_k$) untersampelt sind, so dass die Gesamtheit der zentralen Frequenzen ($f_k$) eine regelmäßige Segmentierung des Erfassungsbandes $B_{acq}$ durchführt, um die Relation $B_{acq} \leq M \times B_{canal}$ zu überprüfen, jedes von einer Antenne in Paketen von K Proben empfangene digitale funkelektrische Signal mit K, gegeben durch die Relation $K = \dfrac{TxFe}{RE}$, zu filtern, und jedes gefilterte digitale Signal in Vektoren ($\underline{x}(f_k,t)$) zu klassifizieren, deren Komponenten ($x_1(f_k,t), x_2(f_k,t),..., x_N(f_k,t)$) den Signalen der verschiedenen Antennen (A1, AN) entsprechen, die durch einen selben Filter der bestimmten Zentralfrequenz ($f_k$) gefiltert wurden.

**3.** Verfahren nach Anspruch 2, **dadurch gekennzeichnet, dass** die Berechnung (2) einer zyklischen Kovarianzmatrix (U($\alpha$k)) für den ersten Moment darin besteht, zwei Vektoren ($\underline{x}(f_k,t), \underline{x}(f_m,t)$) der Frequenz $f_k$ und $f_m$, auszuwählen, sie zu blanchieren (5), um zwei neue Vektoren ($\underline{z}(f_k,t), \underline{z}(f_m,t)$) zu erhalten, K Matrizen U(t) zu berechnen, die von der Relation $U(t) = \underline{z}(f_k,t) \times \underline{z}(f_m,t)^+$ gegeben sind, die der Beobachtungsdauer T entspricht, jede Komponente $u_{ij(\alpha k)}$ der zyklischen Kovarianzmatrix (U($\alpha$k)) durch Realisierung einer schnellen Fourier-Transformation über K Punkte unter Verwendung der K-Punkte desselben Indizes ij der K-Matrizen U(t) zu berechnen (6).

**4.** Verfahren nach einem der Ansprüche 2 und 3, **dadurch gekennzeichnet, dass** die Berechnung einer zyklischen Kovarianzmatrix (U($\alpha$k)) für den zweiten Moment darin besteht, zwei Vektoren ($\underline{x}(f_k,t), \underline{x}(-f_m,t)$) der Frequenz $f_k$ und $-f_m$, auszuwählen, sie zu blanchieren (5), um zwei neue Vektoren ($\underline{z}(f_k,t), \underline{z}(-f_m,t)$) zu erhalten, K Matrizen U(t) zu berechnen, die von der Relation $U(t) = \underline{z}(f_k,t) \times \underline{z}(-f_m,t)^t$ gegeben sind, die der Beobachtungsdauer T entspricht, jede Komponente $u_{ij(\alpha k)}$ der zyklischen Kovarianzmatrix (U($\alpha$k)) durch Realisierung einer schnellen Fourier-Transformation über K Punkte unter Verwendung der K-Punkte desselben Indizes ij der K-Matrizen U(t) zu berechnen (6).

**5.** Verfahren nach einem der Ansprüche 2 bis 4, **dadurch gekennzeichnet, dass** für jede zyklische Frequenz ($\alpha$k) des gegebenen Raums zyklische Frequenz - harmonische Frequenz das Wahrscheinlichkeitsverhältnis (V($\alpha$k)) gemäß folgender Relation

$$V(\alpha k) = -2BT \, \text{In} \, [\det(I - U(\alpha k).U(\alpha k)^+)]$$

mit I als Identitätsmatrix und $B = B_{canal}$ berechnet wird.

**6.** Verfahren nach einem der Ansprüche 1 bis 5, **dadurch gekennzeichnet, dass** die Detektionsschwelle von einem chi_2-Gesetz bestimmt wird.

**7.** Verfahren nach einem der Ansprüche 1 bis 6, **dadurch gekennzeichnet, dass** die Antennenpaare (A1, AN) derart sind, dass die Sensibilitäts-Maxima-Maximorum der zwei Antennen in zwei orthogonalen Richtungen zielen.

**8.** Verfahren nach einem der Ansprüche 1 bis 6, **dadurch gekennzeichnet, dass** die Antennenpaare (A1, AN) derart sind, dass die Sensibilitäts-Maxima-Maximorum der zwei Antennen in dieselbe Richtung zielen.

ACQUISITION
DES
SIGNAUX
$\underline{x}\,(f_k,\,t\,)$

1

MATRICE DE
COVARIANCE
CYCLIQUE
$U(\alpha_k)$

2

RAPPORT DE
VRAISEMBLANCE
$V(\alpha_k)$

3

COMPARAISON
DÉTECTION

4

# FIG.1

FIG.2

MSK en $f = -125$ kHz

FIG.3

MSK en $f = 873$ kHz et 875 kHz

FIG.4

FIG.5

FIG.6

FIG.7

1er MOMENT

FIG.8

2nd MOMENT

FIG.9

FIG.10

FIG.11

FIG.12a

FIG.12b